# EUROPEAN PATENT APPLICATION

(11) **EP 4 539 345 A1**
(43) Date of publication of application: **16.04.2025**
(21) Application number: 23843133.2
(22) Date of filing: 26.04.2023
(51) Int. Cl.: H04B 1/3827, H04B 7/06, H04B 1/50, H04W 52/28, G06F 1/16

(54) **ELECTRONIC DEVICE AND METHOD FOR SWITCHING ANTENNA THEREOF**

(30) Priority: 22.07.2022 KR 20220091100; 19.08.2022 KR 20220103973
(71) Applicant: Samsung Electronics Co., Ltd., Suwon-si, Gyeonggi-do 16677 (KR)
(72) Inventor: KIM, Hakjin, Suwon-si, Gyeonggi-do 16677 (KR); YOO, Jangsun, Suwon-si, Gyeonggi-do 16677 (KR); MOON, Jihye, Suwon-si, Gyeonggi-do 16677 (KR); LEE, Myeonggil, Suwon-si, Gyeonggi-do 16677 (KR); CHOI, Donguk, Suwon-si, Gyeonggi-do 16677 (KR); LIM, Gun, Suwon-si, Gyeonggi-do 16677 (KR)
(74) Representative: Gulde & Partner
(86) International application number: PCT/KR2023/005694
(87) International publication number: WO 2024/019274

(57) **Abstract**

The electronic device may comprise, as a foldable housing, a hinge structure, a first antenna disposed on a part of a first lateral member, a second antenna disposed on a part of the first lateral member so as to transmit/receive signals in a second frequency band different from a first frequency band, a third antenna disposed on a part of a second lateral member so as to transmit/receive signals in the first frequency band, a fourth antenna disposed on a part of the second lateral member so as to transmit/receive signals in the second frequency band, a switch for electrically connecting at least one of the first, second, third, and fourth antennas to a wireless communication circuit, a sensor for sensing an external object contacting or approaching the electronic device, and a processor. The processor may select an antenna to output signals on the basis of the frequency band of signals transmitted by the wireless communication circuit, the status of the foldable housing, and/or a contact or approach of an external object by the sensor, and may control the switch such that the wireless communication circuit and the selected antenna are electrically connected.

## Description

### [Technical Field]

Various embodiments disclosed in the disclosure relate to an electronic device including an antenna and a method for switching an antenna thereof.

### [Background Art]

Electronic devices are released in various structures. The electronic device may be configured, for example, in a folding structure, and may include a flip cover, a dual display, or a flexible display. The electronic device may provide mobile communication services using an antenna. The antenna of the electronic device may be disposed in a partial area inside and/or outside a housing.

These days, with the development of technology, the functions of devices such as note PCs, smartphones, and tablets are becoming more advanced and increasingly integrated. In addition, as various types of applications such as games, video streaming, and the like are continuously developed, consumer needs are also becoming more diverse. Wireless communication is essential to utilize various applications in electronic devices, and as the amount of data transmission/reception is increasingly required, the implementation of 5G communication technology may be needed. In order to implement 5G communication technology in electronic devices, at least four or more 5G antennas are required.

### [Disclosure of Invention]

### [Technical Problem]

As foldable electronic devices gain attention, the display area may expand. Foldable electronic devices may require a front display to provide a screen to a user in a folded state. Metal materials may be applied to the exterior of the foldable electronic device in order to employ a front display. Antennas may be difficult to be disposed on the electronic device without signal interference in a situation where the metal materials are applied to the exterior of the device.

Foldable electronic devices may switch to a folded state or an unfolded state, based on a hinge structure. Foldable electronic devices may operate in an in-folding or out-folding manner. A housing of the foldable electronic device may have an outer surface formed of a metal material (conductive portion), and a part of the metal material may be used as an antenna (or radiator). When using the metal material formed on the housing of the foldable electronic device as an antenna, contact of the user's body part while the user is carrying and using the electronic device may cause degradation of the antenna performance (e.g., death grip).

In order to determine the level of electromagnetic waves, generated from wireless communication products, harmful to the human body, respective countries establish and manage the SAR (specific absorption rate) radio wave standard. Electronic devices may satisfy the SAR by reducing the output of radio waves when the human body comes into contact with them. However, if the output of radio waves is reduced, the electronic device may have difficulty transmitting data.

### [Solution to Problem]

An electronic device may include a foldable housing including a hinge structure, a first housing structure connected to the hinge structure and including a first surface facing a first direction, a second surface facing a second direction opposite the first surface, and a first lateral member surrounding a first space between the first surface and the second surface, and a second housing structure connected to the hinge structure and including a third surface facing a third direction, a fourth surface facing a fourth direction opposite the third direction, and a second lateral member surrounding a second space between the third surface and the fourth surface, the second housing structure being folded relative to the first housing structure around the hinge structure, and configured so that the third direction is opposite the first direction in a folded (closed) state and so that the third direction is the same as the first direction in an unfolded (open) state, a wireless communication circuit, a first antenna configured to transmit and receive a signal in a first frequency band and disposed on a part of the first lateral member, a second antenna configured to transmit and receive a signal in a second frequency band different from the first frequency band and disposed on a part of the first lateral member, a third antenna configured to transmit and receive a signal in the first frequency band and disposed on a part of the second lateral member, a fourth antenna configured to transmit and receive a signal in the second frequency band and disposed on a part of the second lateral member, a switch configured to electrically connect at least one of the first antenna, the second antenna, the third antenna, and the fourth antenna to the wireless communication circuit, a sensor configured to detect an external object that comes into contact with or approaches the electronic device, and a processor.

The processor may select an antenna to output a signal transmitted from the wireless communication circuit, based on a frequency band of the signal, a state of the foldable housing, and/or detecting contact or an approach of the external object by the sensor, and control the switch so that the wireless communication circuit and the selected antenna are electrically connected.

A method for switching antennas in an electronic device may include selecting an antenna to output a signal transmitted from a wireless communication circuit, based on a frequency band of the signal, a state of a foldable housing, and/or detecting contact or an approach of an external object by a sensor, and controlling a switch so that the wireless communication circuit and the selected antenna are electrically connected.

### [Advantageous Effects of Invention]

According to various embodiments, the electronic device may expand the antenna connected to a single port of a wireless communication module from a single antenna to multiple antennas, thereby simultaneously securing performance in low, mid, high, and ultra-high bands, which are difficult to implement with a single antenna.

According to various embodiments, when a human body approaches an antenna near a system, the electronic device may detect the same and utilize an antenna located in another area where the human body does not come into contact, thereby satisfying the SAR (specific absorption rate) radio wave standard without reducing the antenna power.

According to various embodiments, when a human body approaches an antenna near a system, the electronic device may detect the same and utilize an antenna located in another area where the human body does not come into contact, thereby improving communication performance.

### [Brief Description of Drawings]

FIG. 1 is a block diagram of an electronic device in a network environment according to various embodiments.
FIG. 2A illustrates an electronic device according to a comparative embodiment.
FIG. 2B illustrates an unfolded state of an electronic device according to various embodiments disclosed in the disclosure.
FIG. 2C illustrates the antenna arrangement of an electronic device according to a comparative embodiment.
FIG. 2D illustrates the antenna arrangement of an electronic device according to various embodiments.
FIG. 2E illustrates an intermediate state of an electronic device according to various embodiments disclosed in the disclosure.
FIG. 3 is a block diagram illustrating the configuration of an electronic device according to various embodiments.
FIG. 4A is a cross-sectional view of an electronic device according to various embodiments. FIG. 4B is a block diagram of an electronic device according to various embodiments.
FIG. 5A is a cross-sectional view illustrating an open state of an electronic device according to various embodiments. FIG. 5B is a cross-sectional view illustrating a closed state of an electronic device according to various embodiments.
FIGS. 6A and 6B are flowcharts illustrating a switching method of an electronic device according to various embodiments.

### [Mode for the Invention]

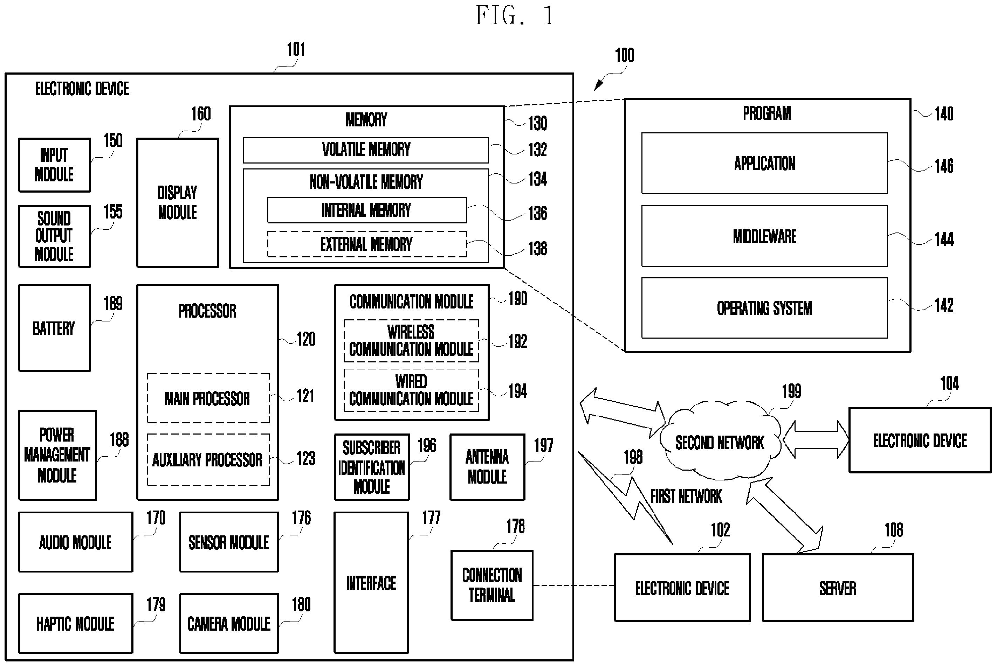

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

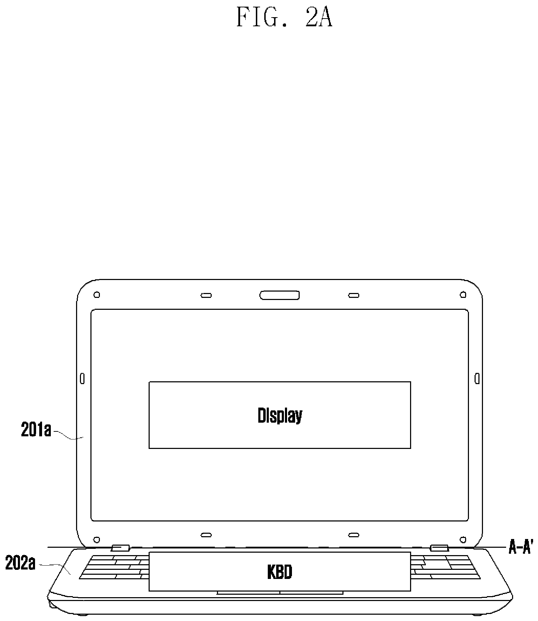

FIG. 2A illustrates an electronic device according to a comparative embodiment.

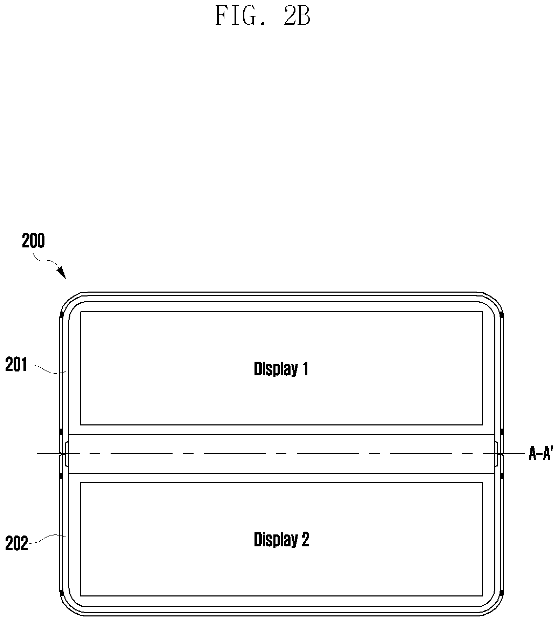

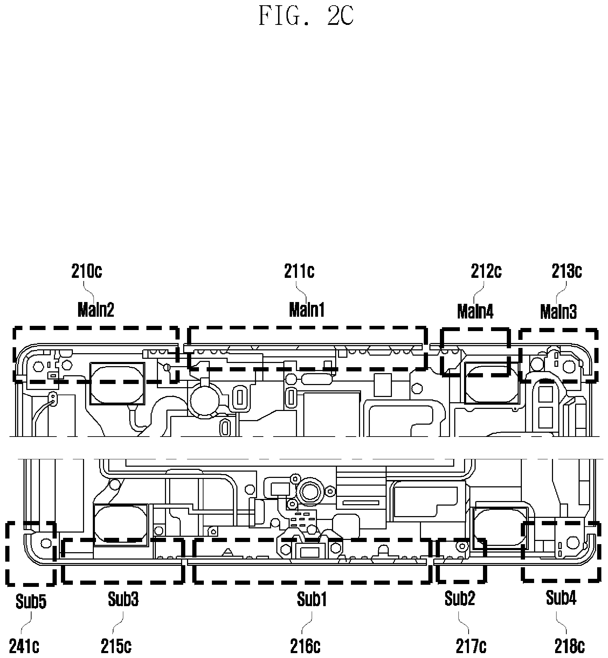

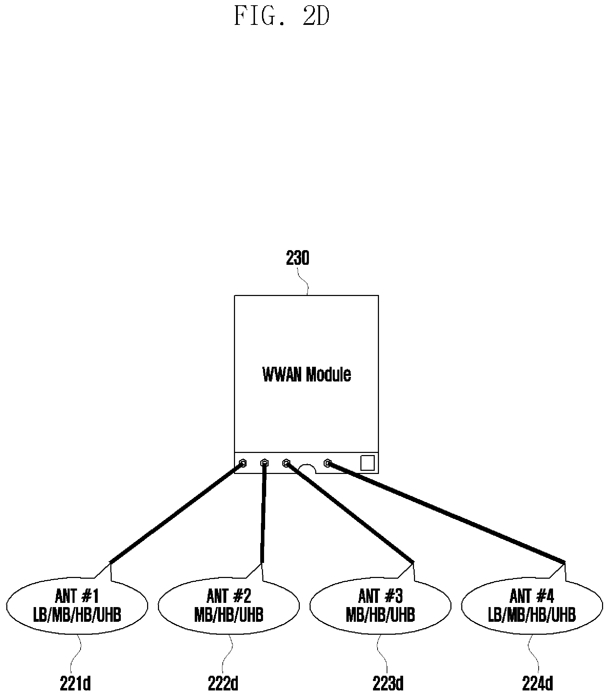

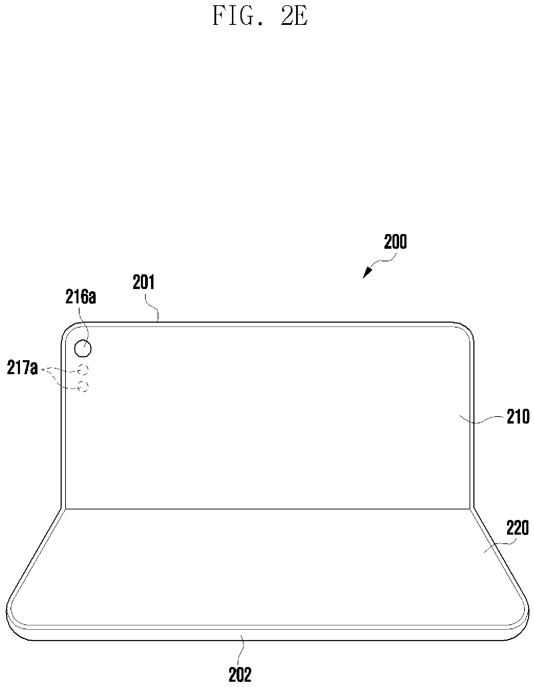

The electronic device according to FIG. 2A may include an electronic device such as a laptop PC. The electronic device according to FIG. 2A may include a first housing 201a and a second housing 202a that are coupled to be foldable relative to each other. For example, the first housing 201a and the second housing 202a may rotate about a folding axis (e.g., the axis A-A illustrated in FIG. 2) relative to each other. The electronic device according to FIG. 2A may be folded so that a physical keyboard disposed in the first housing 201a and a display module (e.g., the display module 160 in FIG. 1) disposed in the second housing 202a face each other.

FIG. 2B illustrates an unfolded state of an electronic device according to various embodiments disclosed in the disclosure.

According to various embodiments disclosed in the disclosure, an electronic device 200 (e.g., the electronic device 101 in FIG. 1) may include an electronic device 200 such as a foldable laptop PC shown in FIG. 2B. The electronic device 200 may include a first housing 201 and a second housing 202 that are coupled to be folded relative to each other. For example, the first housing 201 and the second housing 202 may rotate about a folding axis (e.g., the axis A-A shown in FIG. 2) relative to each other. Unlike the electronic device in FIG. 2A, the electronic device 200 in FIG. 2B may include a display module (e.g., the display module 160 in FIG. 1), instead of a physical keyboard, in the first housing 201. The display module 160 may display various user interfaces. The display module 160 may display a virtual keyboard and receive user input onto the virtual keyboard. The electronic device 200 may have a structure in which a display module disposed in the first housing 201 and a display module (e.g., the display module 160 in FIG. 1) disposed in the second housing 202 face each other in a folded state. The display module disposed in the first housing 201 and the display module disposed in the second housing 202 may be configured as a single display.

In an embodiment, the first housing 201 and the second housing 202 may be disposed on both sides of the folding axis (e.g., the axis A-A shown in FIG. 2), and may have a substantially symmetrical shape with respect to the folding axis. In another embodiment, the first housing 201 and the second housing 202 may have an asymmetrical shape with respect to the folding axis. The angle or distance between the first housing 201 and the second housing 202 may vary depending on whether the electronic device 200 is in an unfolded state, a folded state, or an intermediate state. The unfolded state may indicate that the electronic device 200 is in an open state. The folded state may indicate that the electronic device 200 is in a closed state. The intermediate state may indicate that the electronic device 200 is in a partially unfolded state.

FIG. 2C illustrates the antenna arrangement of an electronic device according to a comparative embodiment.

The electronic device according to FIG. 2C may have the same shape as the electronic device in FIG. 2A. The electronic device according to FIG. 2C may segment metal and utilize the same as antennas 210c to 218c. The antennas 210c to 218c may have antenna resonance formation frequencies and bandwidths determined by the length of the metal frame. The electronic device according to FIG. 2C may use multiple antennas separated by band. The electronic device according to FIG. 2C may use a metal segment antenna.

FIG. 2D illustrates the antenna arrangement of an electronic device according to various embodiments. The electronic device in FIG. 2D may have the same shape as the electronic device 200 in FIG. 2B. Unlike FIG. 2C, the electronic device 200 in FIG. 2D may use a wireless communication module 230 to increase the efficiency of mounting design and reduce costs. The wireless communication module 230 may include four RF connectors. The RF connectors may indicate components connecting antennas 221d, 222d, 223d, and 224d and the wireless communication module 230. The electronic device 200 according to various embodiments may include antennas 221d to 224d corresponding to the respective RF connectors. Unlike the electronic device in FIG. 2C, the electronic device 200 in FIG. 2D may include a limited number of antennas 221d to 224d. The antennas 221d to 224d may be designed to output signals in at least one frequency band. The antennas 221d to 224d may output signals of different frequency bands depending on the lengths of the antennas 221d to 224d. The lengths of the antennas 221d to 224d may be designed in consideration of the frequency band of a signal to be output. For example, a first antenna 221d may be designed to transmit and receive a signal corresponding to a low band (frequency of about 700 MHz and wavelength of about 42.9 cm). The first antenna 221d may have an antenna length of about 10.7 cm capable of outputting a signal in a low band. The wireless communication module 230 in FIG. 2D may have a fixed frequency band assigned to each RF connector (or port). The antennas 221d to 224d in FIG. 2D may have determined electrical lengths to operate in response to a communication frequency to be transmitted or received. The electronic device 200 utilizing metal segment antennas may select an antenna capable of outputting a signal desired to be transmitted or received from among the antennas 221d to 224d having different lengths.

FIG. 2E illustrates an intermediate state of an electronic device according to various embodiments disclosed in the disclosure.

Referring to FIG. 2E, the electronic device 200 may be operated to maintain the intermediate state through a hinge module. According to an embodiment, the intermediate state indicates an operation state between the unfolded state and the folded state of the first housing 201 and the second housing 202, and may include an operation state in which the folding angle of the first housing 201 and the second housing 202 falls within a third reference range (e.g., about 20 degrees to about 170 degrees). According to an embodiment, the electronic device 200 may be operated so that the first housing 201 and the second housing 202 remain in the unfolded state at various angles within the intermediate state through the hinge module. For example, the unfolded state of the first housing 201 and the second housing 202 may include an operation state in which the folding angle of the first housing 201 and the second housing 202 falls within a first reference range (e.g., about 170 degrees to about 180 degrees). For example, the folded state of the first housing 201 and the second housing 202 may include an operation state in which the folding angle of the first housing 201 and the second housing 202 falls within a second reference range (e.g., about 0 degrees to about 20 degrees).

According to an embodiment, the electronic device 200 may use the first display 210 or the second display 220, based on the folding angles of the first housing 201 and the second housing 202. The first display 210 and the second display 220 may be connected in the form of a single display. For example, the electronic device 200 may use the second display 220 when the folding angle of the first housing 201 and the second housing 202 falls within a specified first range (e.g., about 20 degrees to about 75 degrees). For example, the electronic device 200 may use the first display 210 when the folding angle of the first housing 201 and the second housing 202 falls within a specified second range (e.g., about 75 degrees to about 170 degrees).

In a laptop PC shown in FIG. 2A, the degree of freedom of the antenna pattern space is relatively high, so that a single antenna of the laptop PC may have an electrical length corresponding to multiple frequencies. However, since the foldable laptop PC shown in FIG. 2B is implemented to use a metal frame as a radiator, the degree of freedom in the space where the antenna pattern is implemented may be relatively low. In a structure in which a metal frame is used as a radiator, the foldable laptop PC may have the difficulty of securing performance of multiple frequencies with only the length of one metal frame.

The electronic device 200 according to various embodiments of the disclosure may perform control such that antennas may be separated by band using switches even in a situation where the metal segment antennas 221d to 224d are utilized.

The electronic device (e.g., laptop, note PC, etc.) in FIG. 2A may have a structure in which an antenna (e.g., the antenna module 197 in FIG. 1) is embedded in a system unit and in which the area where the antenna 197 radiates a signal is not exposed to the outside. The electronic device in FIG. 2A may include a radiator for radiating radio waves may be embedded in the system unit without being exposed to the outside and a plurality of devices between the human body and the same. The electronic device 200 (e.g., a foldable note PC) in FIG. 2B may use a metal frame, which is exposed to the outside, as a radiator. In the electronic device 200 in FIG. 2B, the radiator may come into direct contact with the human body. When the antenna 197 and the human body are in direct contact, the radio waves emitted from the antenna 197 may have a greater effect on the human body. When the antenna 197 and the human body are in direct contact, the electronic device 200 may have difficulty satisfying the SAR (specific absorption rate) standard. The SAR standard may indicate the rate at which energy per unit mass is absorbed by the human body when the human body is exposed to a radio frequency (RF) electromagnetic field. The unit of SAR may include watts per kilogram (W/kg). The higher the SAR, the more energy may be absorbed by the human body, compared to the case where the SAR is low.

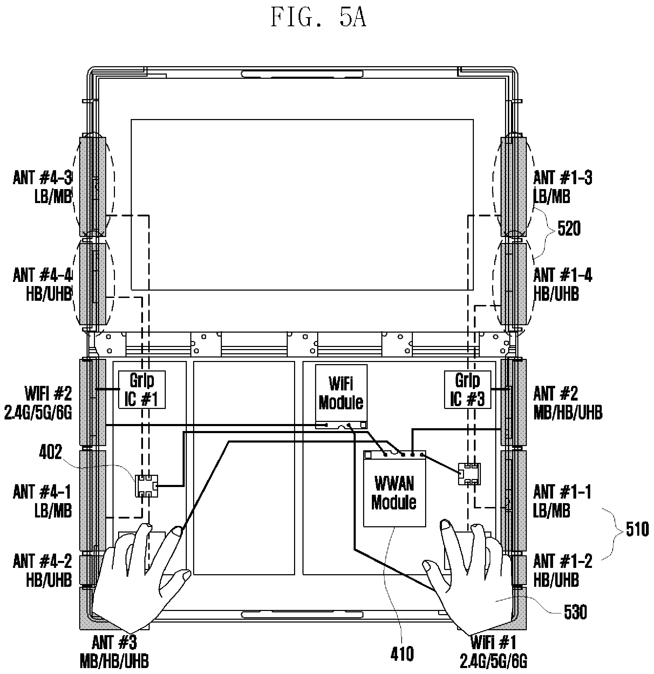

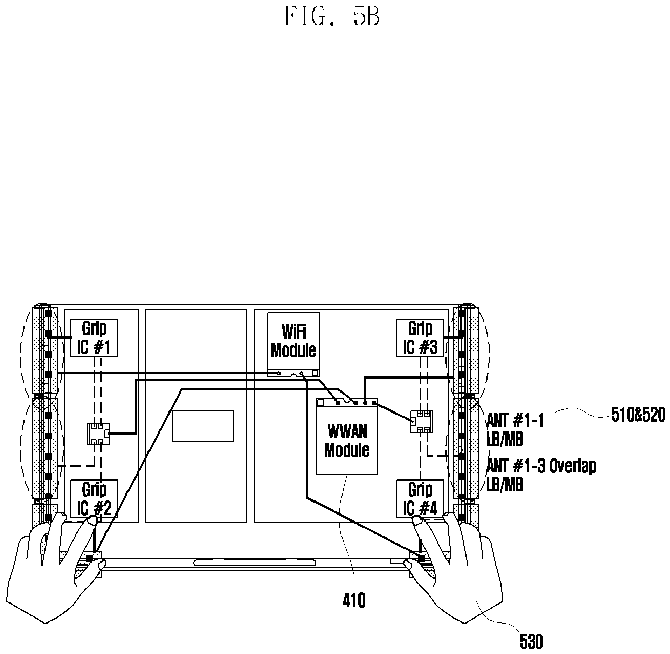

In an embodiment, as the distance between the antenna 197 and the human body is reduced, the influence of the human body on the radio wave radiation performance of the antenna may increase. According to one example, when the antenna 197 and the human body come into direct contact, the degree to which the human body affects the radio wave radiation of the antenna 197 may also increase relatively. When the human body comes into contact with the antenna 197, the performance of the antenna 197 may decrease due to the influence of the human body having a high permittivity. The phenomenon in which the performance of the antenna 197 is lowered due to the influence of the human body having a high permittivity may be called a death grip (or antenna gate). The death grip will be described with reference to FIGS. 5A and 5B.

The electronic device 200 in FIG. 2B may include more user cases than the electronic device in FIG. 2A. For example, the electronic device 200 in FIG. 2B may be used in an open state or in a closed state. Alternatively, the electronic device 200 in FIG. 2B may be in a state in which it is horizontally or vertically held in the closed state. The electronic device 200 in FIG. 2B needs to satisfy the SAR and secure communication performance in various user cases. Hereinafter, an operation in which the electronic device 200 switches the antennas that operate in order to satisfy the SAR and secure communication performance in various user cases will be described.

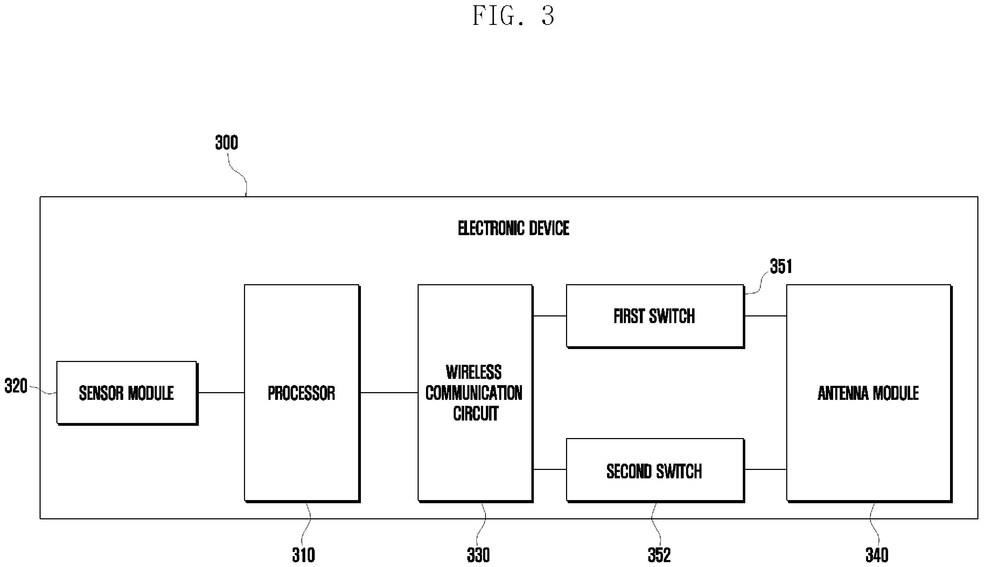

FIG. 3 is a block diagram illustrating the configuration of an electronic device according to various embodiments.

According to various embodiments, an electronic device (e.g., the electronic device 200 in FIG. 2B) 300 may include a processor 310, a sensor module 320, a wireless communication circuit 330, an antenna module 340, a first switch 351, and a second switch 352. The number of switches that the electronic device 300 may include may not be limited to two.

According to various embodiments, the processor 310 is a configuration capable of performing operations or data processing related to control and/or communication of respective components of the electronic device 300, and may be comprised of one or more processors. The processor 310 may include at least some of the configurations and/or functions of the processor 120 in FIG. 1.

According to various embodiments, although the processor 310 is not limited to specific operations and data processing functions that may be implemented on the electronic device 300, the features related to the control of the antenna module 340, the first switch 351, and the second switch 352 will be described below in detail. The operations of the processor 310 may be performed by loading instructions stored in a memory (not shown).

According to various embodiments, the sensor module 320 may include a plurality of grip sensors (not shown). The plurality of grip sensors (not shown) may be substantially the same as the sensor module 176 in FIG. 1, or may be included in the sensor module 176. According to an embodiment, the electronic device 300 may include a first grip sensor (not shown) to a fourth grip sensor (not shown), but may not be limited thereto. The electronic device 300 may include multiple grip sensors electrically connected to the respective antennas physically adjacent thereto.

According to various embodiments, the antenna module 340 may include a plurality of antennas (not shown). The plurality of antennas (not shown) may transmit and/or receive radio frequency (RF) signals in a specified frequency band to and/or from an external device. According to an embodiment, the plurality of antennas (not shown) may be disposed on at least a portion of a housing (e.g., a side plate and/or a rear plate) of the electronic device 300 or may be configured as conductors (or conductive parts) disposed adjacent to the housing inside the housing. For example, the housing constitutes the exterior of the electronic device 300, and may include at least one nonconductive portion and conductive portion. According to an embodiment, the plurality of antennas (not shown) may be disposed physically adjacent to each other. For example, the plurality of antennas (not shown) may support frequency bands for wireless communication of at least one of LTE (long-term evolution), NR (new radio), Bluetooth, BLE (Bluetooth low energy), GNSS (global navigation satellite system), or wireless LAN (local area network). For example, the physically adjacent state may include a state in which the shortest distance between the first antenna (e.g., the first antenna 221d in FIG. 2D) (e.g., a first conductor) and the second antenna (e.g., the second antenna 222d in FIG. 2D) (e.g., a second conductor) is less than or equal to a specified distance (e.g., a state in which a specified distance is satisfied). For example, the physically adjacent state may include, when the electronic device 300 is a foldable device, a state in which the shortest distance between the first antenna 221d and the second antenna 222d in the folded state (or unfolded state) of the electronic device 300 is less than or equal to a specified distance (e.g., a state in which a specified distance is satisfied).

According to various embodiments, the wireless communication circuit 330 may process an RF signal to be transmitted to and/or received from an external device through at least one antenna (e.g., 221d to 224d in FIG. 2D). According to an embodiment, the wireless communication circuit 330 may include a radio frequency integrated circuit (RFIC) and a radio frequency front end (RFFE) for communication with the external device. For example, the RFFE may preprocess an RF signal received from the external device through at least one antenna (not shown). For example, the RFFE may amplify an RF signal received from the external device through at least one antenna (not shown) while suppressing noise through a low-noise amplifier (LNA). The RFIC may down-convert an RF signal preprocessed in the RFFE into a baseband signal so that it may be processed by the processor 310. For example, the RFIC may modulate a signal received from the processor 310. The RFFE may amplify an RF signal received from the RFIC to transmit the signal to the external device through at least one antenna 340.

According to various embodiments, the wireless communication circuit 330 may communicate with the external device through a wireless network under the control of the processor 310. The wireless communication circuit 330 may include hardware and software modules for transmitting and receiving through a cellular network (e.g., an LTE (long-term evolution) network, a 5G network, or an NR (new radio) network) and a short-range network (e.g., Wi-Fi or Bluetooth). The wireless communication circuit 330 may include at least some of the configurations and/or functions of the communication module 190 in FIG. 1.

According to various embodiments, the processor 310 may obtain operation information of a plurality of grip sensors (not shown). According to an embodiment, the processor 310 may receive operation information of the plurality of grip sensor (not shown) at a time at which the respective grip sensors (not shown) are activated. According to an embodiment, the processor 310 may obtain operation information related to the plurality of grip sensors (not shown) from a memory (not shown) of the electronic device 300. For example, the operation information of the grip sensor may include information related to an operating frequency (e.g., a sampling frequency) and/or a timing offset. For example, the timing offset may include information related to the time at which the grip sensor starts operating. For example, the operating frequency may include information related to the driving cycle of the grip sensor.

In an embodiment, the electronic device may separate the frequency band by disposing a diplexer instead of the switch. However, the diplexer is a passive element that may separate a specific frequency into a low-band frequency and a high-band frequency. When the electronic device uses a diplexer, it may be difficult to separate the antennas by band. For example, in the case of using a diplexer, the electronic device may implement performance in a first antenna for a band below 2 GHz, and may implement performance in a second antenna for a band exceeding 2 GHz. That is, in the case of using a diplexer, the electronic device may require at least two antennas in order to separate the band based on 2 GHz. In addition, when the electronic device uses a diplexer, the bands of the antennas are fixed, so in order to separate them into different frequency bands, antennas corresponding thereto may be further required. Electronic devices using diplexers may have difficulty securing frequency performance in multiple bands because of the limitation that the number of antennas increases along with the number of frequency bands desired to be separated and used.

The electronic device 300 according to the disclosure may secure frequency performance in multiple bands with a limited number of antennas using a switch instead of a diplexer. For example, the electronic device 300 may position a first switch in a first part of the first antenna, thereby securing performance in a band of 800 MHz. The electronic device 300 may position the first switch in a second part of the first antenna, thereby securing performance in a band of 2.5 GHz. The electronic device 300 may adjust the band in which the performance is secured by adjusting the length of the antenna. The electronic device 300 may adjust the length of the antenna through which current flows using the switches. The electronic device 300 may position a second switch in a first part of the second antenna, thereby securing performance in a band of 1.8 GHz. The electronic device 300 may position the second switch in a second part of the second antenna, thereby securing performance in a band of 3.5 GHz. The number of antennas, the number of antenna parts, and the bands mentioned above are only examples and the disclosure is not limited thereto.

The electronic device 300 according to the disclosure may secure performance in a plurality of frequency bands, in the case where the physical lengths of the antennas are fixed, using the switches instead of diplexers. The electronic device 300 according to the disclosure, when it is difficult to secure communication performance of an antenna due to the approach of a human body, may switch the antenna to another antenna using a switch, instead of a diplexer. The electronic device 300 according to the disclosure may secure communication performance while reducing the influence of the human body on the antenna and satisfying the SAR using a switch, instead of a diplexer. A switching operation of the electronic device 300 using a switch, instead of a diplexer, will be described below.

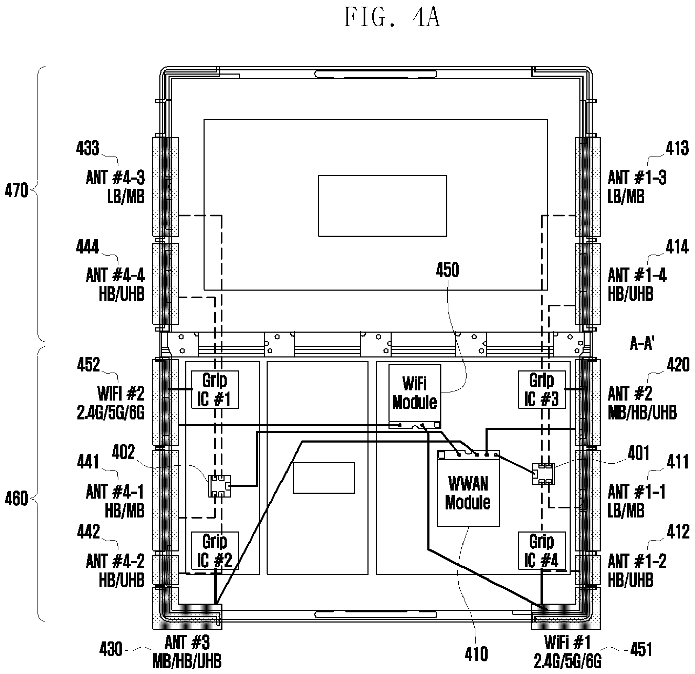

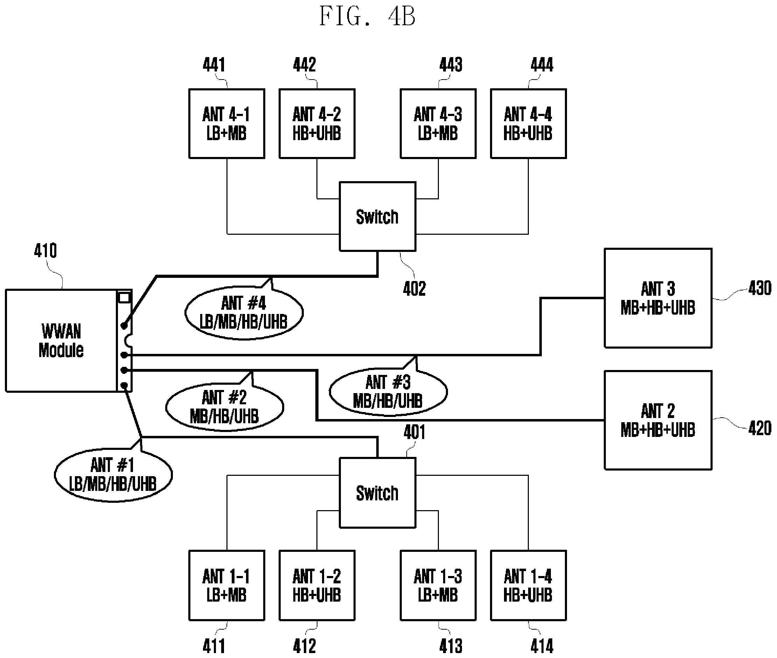

FIG. 4A is a cross-sectional view of an electronic device according to various embodiments. FIG. 4B is a block diagram of an electronic device according to various embodiments.

According to various embodiments, an electronic device (e.g., the electronic device 200 in FIG. 2B) may include a wireless communication circuit 410, a Wi-Fi communication circuit 450, and a plurality of antennas. The electronic device 200 may include a system unit 460 and an upper unit 470.

According to an embodiment, the wireless communication circuit 410 may be electrically connected to a second antenna 420 and a third antenna 430. The wireless communication circuit 410 may be electrically connected to a 1-1st antenna 411, a 1-2nd antenna 412, a 1-3rd antenna 413, and a 1-4th antenna 414 through a first switch 401. The wireless communication circuit 410 may be electrically connected to a 4-1st antenna 441, a 4-2nd antenna 442, a 4-3rd antenna 443, and a 4-4th antenna 444 through a second switch 402.

According to an embodiment, the Wi-Fi communication circuit 450 may be electrically connected to a 5-1st antenna 451 and a 5-2nd antenna 452.

The electronic device according to FIG. 2A may include a structure in which the antenna resonance formation frequency and bandwidth are determined by the length of a metal frame. The electronic device according to FIG. 2A may have and use components such as a transceiver, an LPAMID, a FEM, a diplexer, and a filter, which are disposed on a PCB board. The electronic device according to FIG. 2A may electrically transmit band signals generated by a transceiver to specific antennas using a diplexer.

On the other hand, the electronic device 200 according to various embodiments of the disclosure may use a wireless communication circuit 410 to solve the mounting space and cost problems. Since the wireless communication circuit 410 has components such as a transceiver, an LPAMID, a FEM, a diplexer, and a filter, which are embedded therein, the degree of freedom in antenna design for each band may be low.

The electronic device according to FIG. 2A may use antennas, corresponding to signals in various bands, separately by band through a diplexer. On the other hand, since the electronic device 200 according to various embodiments uses a wireless communication circuit 410, the frequency band assigned to each port may be fixed. The electronic device 200 according to various embodiments may use only a limited number of (e.g., 4) antennas corresponding to a limited number of (e.g., 4) ports.

In addition, the electronic device 200 according to various embodiments may use a metal frame as an antenna. If the distance between the human body and the electronic device 200 is reduced, the resonance performance of the antenna implemented to correspond to a target frequency may be lowered. When the human body approaches, the resonance frequency of the antenna may change. In a structure in which a metal frame is used as an antenna, there may be no structure between the antenna of the electronic device 200 and the human body. The human body may come into direct contact with the antenna on the electronic device 200. Energy radiated from the antenna of the electronic device 200 may be absorbed by the human body. In the case where the antenna and the human body are in direct contact, the electronic device 200 may lower the energy radiated from the antenna to satisfy the SAR radio wave standard. If the energy radiated from the antenna is lowered, the data transmission performance of the antenna may deteriorate.

The electronic device 200 according to various embodiments of the disclosure may solve the problem of covering various bands using a limited number of antennas, the problem of making it difficult to satisfy the SAR due to the direct contact between the antenna and the human body, and the problem of data transmission performance deteriorating due to lowering the transmission power of the antenna to satisfy the SAR. The electronic device 200 may connect a plurality of antennas to one port using the first switch 401 and the second switch 402. The electronic device 200 may use the antennas separately by frequency band using the first switch 401 and the second switch 402. When the human body approaches a specific antenna, the electronic device 200 may use another antenna disposed in a position capable of avoiding the human body using the first switch 401 and the second switch 402.

According to FIG. 4B, the wireless communication circuit 410 may be electrically connected to the second antenna 420 and the third antenna 430. The wireless communication circuit 410 may be electrically connected to the 1-1st antenna 411, the 1-2nd antenna 412, the 1-3rd antenna 413, and the 1-4th antenna 414 through the first switch 401. The wireless communication circuit 410 may be electrically connected to the 4-1st antenna 441, the 4-2nd antenna 442, the 4-3rd antenna 443, and the 4-4th antenna 444 through the second switch 402.

According to an embodiment, the 1-1st antenna 411, the 1-2nd antenna 412, the 4-1st antenna 441, and the 4-2nd antenna 442 may be located in the system unit 460. The 1-3rd antenna 413, the 1-4th antenna 414, the 4-3rd antenna 443, and the 4-4th antenna 444 may be located in the upper unit 470.

According to an embodiment, the electronic device 200 may use the 1-1st antenna 411 and the 4-1st antenna 441, which are relatively long, when transmitting a signal in a low-frequency band or a signal in a mid-frequency band. The electronic device 200 may use the 1-2nd antenna 412 and 4-2nd antenna 442, which are relatively short, when transmitting a signal in a high-frequency band or a signal in an ultra-high-frequency band.

The electronic device 200 may control the switch, based on the frequency band of a signal to be transmitted, thereby determining an antenna to be electrically connected to the wireless communication circuit 410. For example, the electronic device 200, based on the determination to transmit a signal in a low-frequency band, may control the first switch 401 so that the wireless communication circuit 410 and the 1-1st antenna 411 are electrically connected. The electronic device 200, based on the determination to transmit a signal in a high-frequency band, may control the first switch 401 so that the wireless communication circuit 410 and the 1-2nd antenna 412 are electrically connected.

Alternatively, the electronic device 200, based on the determination to transmit a signal in a low-frequency band, may control the second switch 402 so that the wireless communication circuit 410 and the 4-1st antenna 441 are electrically connected. The electronic device 200, based on the determination to transmit a signal in a high-frequency band, may control the second switch 401 so that the wireless communication circuit 410 and the 4-2nd antenna 442 are electrically connected.

According to an embodiment, the 4-1st antenna 441 and the 4-2nd antenna 442 may be disposed more to the left side of the electronic device 400 than the 1-1st antenna 411 and the 1-2nd antenna 412. The electronic device 400 may determine a position that the human body approaches using a grip sensor and switch to an antenna disposed at a position capable of avoiding the human body. For example, the electronic device 400 may detect an approaching human body using a grip sensor disposed on the left side and operate the first switch 401 so as to use the 1-1st antenna 411 or the 1-2nd antenna 412 disposed on the right side. The electronic device 400 may detect an approaching human body using a grip sensor disposed on the right side and operate the second switch 402 so as to use the 4-1st antenna 441 or the 4-2nd antenna 442 disposed on the left side.

In summary, the electronic device 400 may determine an antenna to be used from among the 4-1st antenna 441 and the 4-2nd antenna 442, based on the transmission frequency band. The electronic device 400 may determine an antenna to be used from among the 1-1st antenna 411 and the 4-1st antenna 441, based on the approaching direction of the human body. The electronic device 400 may operate the switch, based on determining the antenna to be used.

The electronic device 200 according to various embodiments of the disclosure may separate and use the antennas by band using the switches in a structure using the wireless communication circuit 410, thereby avoiding the influence of the human body.

According to an embodiment, the switch may be disposed between the Wi-Fi communication circuit 450, and the 5-1st antenna 451 and the 5-2nd antenna 452. The 5-1st antenna 451 and the 5-2nd antenna 452 may be electrically connected to the Wi-Fi communication circuit 450 through the switch. The electronic device 200 may change the antenna to be connected to the Wi-Fi communication circuit 450 using the switch. The antenna to be connected to the Wi-Fi communication circuit 450, similar to the 5G communication antenna, may have problems with performance degradation and not satisfying the SAR standard due to an approach of the human body. As with the embodiments in FIGS. 4A and 4B, a switching structure may be applied to the antenna connected to the Wi-Fi communication circuit 450, thereby solving the problems with performance degradation and not satisfying the SAR standard due to an approach of the human body.

According to an embodiment, the electronic device 200 may determine an antenna to be connected, based on the antenna performance. For example, in the case where the electronic device 200 transmits a signal in an intermediate band (1920 to 2170 MHz, B1), the electronic device 200 may identify that the performance of the 1-2nd antenna 412 serving in a high frequency or ultra-high-frequency band is better than that of the 1-1st antenna 411 corresponding to the intermediate band. The electronic device 200 may control the switch to use the 1-2nd antenna 412 serving in the high frequency or ultra-high-frequency band, instead of the 1-1st antenna 411 corresponding to the intermediate band, even when transmitting a signal in the intermediate band (1920 to 2170 MHz, B1).

FIG. 5A is a cross-sectional view illustrating an open state of an electronic device according to various embodiments. FIG. 5B is a cross-sectional view illustrating a closed state of an electronic device according to various embodiments.

According to various embodiments, a death grip (or antenna gate) may indicate a phenomenon in which, when a user of an electronic device (e.g., the electronic device 200 in FIG. 2B) holds (or grips) a conductive part used as an antenna of the electronic device 200, the transmission/reception sensitivity of the antenna configured as the conductive part is reduced due to a change in the permittivity of the antenna. For example, if a death grip occurs in the first antenna 510, the communication sensitivity of the first antenna may be degraded. For example, the radiation efficiency of the first antenna 510 may be lowered.

Referring to FIG. 5A, for example, if a user's body part 530 (e.g., a finger) comes into contact with at least a portion of the first antenna 510 while using electronic device 200 in an open state, a death grip phenomenon may occur in the first antenna 510. For example, as shown in FIG. 5A, if the user performs data transmission through the first antenna 510 while holding the electronic device 200 in an open state, the user's body part 530 may come into contact with a conductive part of the first antenna 510, thereby degrading the performance of the first antenna 510.

The electronic device 200 according to various embodiments of the present disclosure may detect the user's grip (or hold) using a grip sensor. The grip sensor may be, for example, a sensor that detects whether or not the user's body part comes into contact with a specific point of the electronic device 200. For example, according to various embodiments, if the user's grip is not detected (e.g., if contact of the user's body part is not detected), the electronic device 200 may control the switch so that a communication signal in a low-frequency band is performed in the first antenna 510. For example, if the user's grip is detected (e.g., if contact of the user's body part is detected), antenna switching may be performed so that a communication signal in a low-frequency band is performed in the second antenna 520. According to various embodiments, the grip sensor may be provided near the first antenna 510.

According to various embodiments disclosed in the disclosure, a phenomenon in which communication sensitivity is reduced (for example, a phenomenon in which antenna radiation efficiency is reduced) may be prevented through antenna switching in the case where a death grip may occur (for example, where a user's hold (or grip) is detected).

The electronic device 200 according to various embodiments of the present disclosure may detect an approach of an external object using a proximity sensor positioned adjacent to a conductive part used as an antenna, thereby quickly determining a situation in which antenna performance degradation may occur.

Referring to FIG. 5B, for example, if the user's body part 530 (e.g., a finger) comes into contact with at least a part of the first antenna 510 while using the electronic device 200 in a closed state, a death grip phenomenon may occur in the first antenna 510.

For example, if the user's body part 530 comes into contact with a part of the first antenna 510, the radiation efficiency of the first antenna 510 may be reduced. For example, as shown in FIG. 5B, if the user's body part 530 comes into contact with at least a portion of the conductive part of the first antenna 510, a death grip phenomenon may occur in the first antenna 510.

According to an embodiment, when the electronic device 200 is in the closed state, the first antenna 510 disposed in a system unit (e.g., the system unit 460 in FIG. 4B) and the second antenna 520 disposed in an upper unit (e.g., the upper unit 470 in FIG. 4B) may overlap. Based on the overlapping of the first antenna 510 and the second antenna 520 in the closed state, the electronic device 200 may operate the first antenna 510 disposed in the system unit 460 when the user's body part 530 approaches. The electronic device 200 may reduce the transmission power of the first antenna 510 when the user's body part 530 approaches.

However, even when the electronic device 200 is in the closed state, the antennas transmitting and receiving signals in the high-frequency band may not overlap. In the case where the electronic device 200 transmits and receives a signal in the high-frequency band, the electronic device 200 may determine, using a grip sensor, that the user's body part 530 approaches the system unit 460 but does not approach the upper unit 470. In the case where the electronic device 200 transmits and receives a signal in the high-frequency band, based on the user's body part 530 not approaching the upper unit 470, the electronic device 200 may perform connection to the second antenna 520 disposed in the upper unit 470, instead of the first antenna 510 disposed in the system unit 460, using a switch.

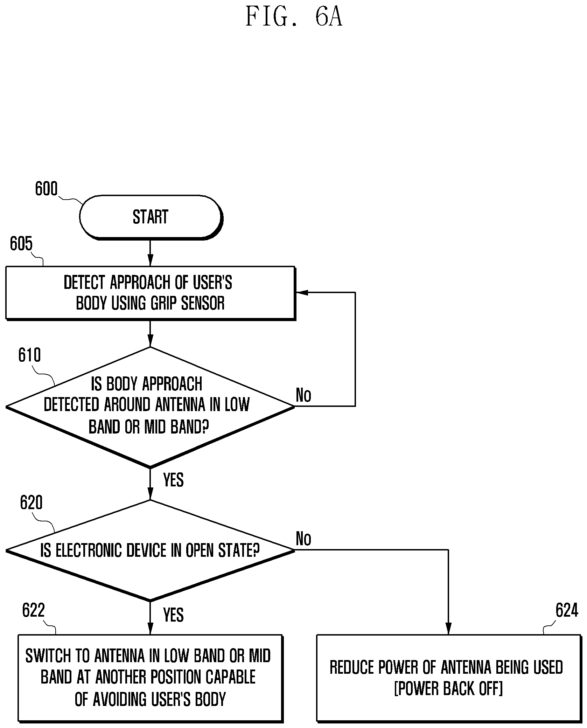

FIG. 6A is a flowchart illustrating a switching method of an electronic device according to various embodiments.

The operations described with reference to FIG. 6A may be implemented based on instructions that may be stored in a computer recording medium or memory (e.g., the memory 130 in FIG. 1).

The illustrated method 600 may be executed by the electronic device (e.g., the electronic device 200 in FIG. 2B) described with reference to FIG. 1 to FIG. 5B, and the descriptions of the technical features made above will be omitted below.

In operation 605, a processor (e.g., the processor 310 in FIG. 3) according to various embodiments may detect an approach of the user's body using a grip sensor. The processor 310 may determine an antenna with which the user's body comes into contact using a plurality of grip sensors. For example, in FIG. 5B, the processor 310 may determine that the user's body has come into contact with a 4-1st antenna (e.g., the 4-1st antenna 441 in FIG. 4B) and a 4-2nd antenna (e.g., the 4-2nd antenna 442 in FIG. 4B), based on a second grip sensor having detected the user's body. The processor 310, based on the second grip sensor having detected the user's body, may change the antennas used to a 4-3rd antenna (e.g., the 4-3rd antenna 443 in FIG. 4B) and a 4-4th antenna (e.g., the 4-4th antenna 444 in FIG. 4B).

In operation 610, the processor 310 may determine whether or not a body is detected within a certain distance from a 1-1st antenna (e.g., the 1-1st antenna 411 in FIG. 4A) serving in a low-frequency band or mid-frequency band. The processor 310 may perform operation 605, based on the body not being detected within a certain distance from the 1-1st antenna 411. The processor 310 may perform operation 620, based on the body being detected within a certain distance from the 1-1st antenna 411.

In operation 620, the processor 310 may determine whether or not the electronic device 200 is in an open state. Based on the electronic device 200 being in the open state, the processor 310 may perform switching so that a wireless communication circuit (e.g., the wireless communication circuit 330 in FIG. 3) is connected to the 1-3rd antenna 413, instead of the 1-1st antenna 411, in operation 622. The 1-3rd antenna 413 may be disposed in the upper unit (e.g., the upper unit 470 in FIG. 4A) to avoid physical contact with the user.

The processor 310, based on the electronic device 200 not being in the open state, may reduce the transmission power of the 1-1st antenna 411 being used in operation 624. The 1-1st antenna 411 may be disposed in a system unit (e.g., the system unit 460 in FIG. 4A). If the electronic device 200 is not in the open state, the processor 310 may determine that the system unit 460 and the upper unit 470 overlap. If the system unit 460 and the upper unit 470 overlap, it may be difficult for both the 1-1st antenna 411 and the 1-3rd antenna 413 to avoid physical contact with the user. In the situation where it is difficult for both the 1-1st antenna 411 and the 1-3rd antenna 413 to avoid physical contact with the user, the processor 310 may transmit data using the 1-1st antenna 411 of the system unit 460 with lower current consumption.

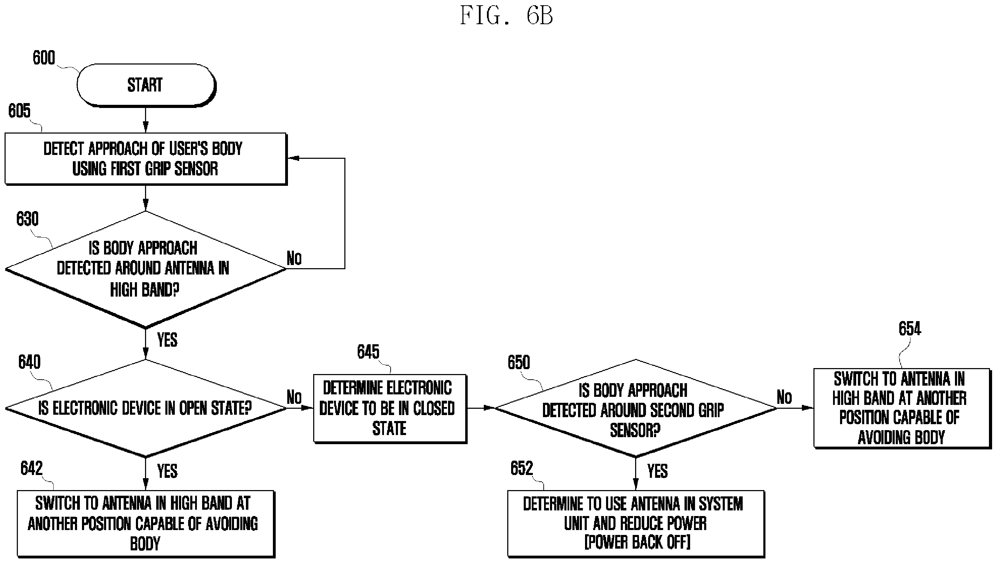

FIG. 6B is a flowchart illustrating a switching method of an electronic device according to various embodiments.

The operations described with reference to FIG. 6B may be implemented based on instructions that may be stored in a computer recording medium or memory (e.g., the memory 130 in FIG. 1). The illustrated method 600 may be executed by the electronic device (e.g., the electronic device 200 in FIG. 2B) described with reference to FIG. 1 to FIG. 5B, and the descriptions of the technical features made above will be omitted below.

In operation 605, the processor 310 may detect an approach of the user's body using a first grip sensor (not shown). The first grip sensor (not shown) may be disposed at the bottom of the system unit 460.

In operation 630, the processor 310 may determine whether or not a body is detected within a certain distance from a 1-2nd antenna (e.g., the 1-2nd antenna 412 in FIG. 4A) serving in a high-frequency band or ultra-high-frequency band. The processor 310 may perform operation 605, based on the body not being detected within a certain distance from the 1-1st antenna 411. The processor 310 may perform operation 640, based on the body being detected within a certain distance from the 1-2nd antenna 412.

In operation 640, the processor 310 may determine whether or not the electronic device 200 is in an open state. Based on the electronic device 200 being in the open state, the processor 310 may perform switching so that a wireless communication circuit (e.g., the wireless communication circuit 330 in FIG. 3) is connected to the 1-4th antenna 414, instead of the 1-2nd antenna 412, in operation 642. The 1-4th antenna 414 may be disposed in an upper unit (e.g., the upper unit 470 in FIG. 4A) to avoid physical contact with the user.

The processor 310, based on the electronic device 200 not being in the open state, may determine that the electronic device 200 is in a closed state in operation 645. In operation 650, the processor 310, based on the electronic device 200 being in the closed state, may determine whether or not a body approach is detected around a second grip sensor (not shown). The second grip sensor (not shown) may be disposed at the top of the system unit 460.

In operation 652, based on a body approach detected around the second grip sensor (not shown), the processor 310 may reduce the transmission power of the 1-2nd antenna 412 being used. The 1-2nd antenna 412 may be disposed in the system unit (e.g., the system unit 460 in FIG. 4A). If both the first grip sensor and the second grip sensor detect an approach of the user's body, it may be difficult for both the 1-2nd antenna 412 and the 1-4th antenna 414 to avoid contact with the user's body. In the situation where it is difficult for both the 1-2nd antenna 412 and the 1-4th antenna 414 to avoid physical contact with the user's body, the processor 310 may transmit data using the 1-2nd antenna 412 of the system unit 460 with lower current consumption.

The processor 310 may determine that the system unit 460 and the upper unit 470 overlap if the electronic device 200 is not in the open state. However, the 1-2nd antenna 412 and the 1-4th antenna 414 serving transmission in high-frequency and ultra-high-frequency bands may not overlap each other even when the system unit 460 and the upper unit 470 overlap. Even when the system unit 460 and the upper unit 470 overlap, the 1-2nd antenna 412 may be disposed around the first grip sensor at the bottom of the system unit 460. Even when the system unit 460 and the upper unit 470 overlap, the 1-4th antenna 414 may be positioned at the top of the system unit 460 around the second grip sensor.

Even if the first grip sensor detects an approach of the user's body, the processor 310, based on the second grip sensor not having detected an approach of the user's body, may perform switching so that the wireless communication circuit 330 is connected to the 1-4th antenna 414 in operation 654. The 1-4th antenna 414 may be positioned at the top of the system unit 460, unlike the 1-2nd antenna 412 disposed at the bottom of the system unit 460, thereby avoiding the body contact in the case where the user comes into contact with only the first grip sensor.

An electronic device may include a foldable housing including a hinge structure, a first housing structure connected to the hinge structure and including a first surface facing a first direction, a second surface facing a second direction opposite the first surface, and a first lateral member surrounding a first space between the first surface and the second surface, and a second housing structure connected to the hinge structure and including a third surface facing a third direction, a fourth surface facing a fourth direction opposite the third direction, and a second lateral member surrounding a second space between the third surface and the fourth surface, the second housing structure being folded relative to the first housing structure around the hinge structure, and configured so that the third direction is opposite the first direction in a folded (closed) state and so that the third direction is the same as the first direction in an unfolded (open) state, a wireless communication circuit, a first antenna configured to transmit and receive a signal in a first frequency band and disposed on a part of the first lateral member, a second antenna configured to transmit and receive a signal in a second frequency band different from the first frequency band and disposed on a part of the first lateral member, a third antenna configured to transmit and receive a signal in the first frequency band and disposed on a part of the second lateral member, a fourth antenna configured to transmit and receive a signal in the second frequency band and disposed on a part of the second lateral member, a switch configured to electrically connect at least one of the first antenna, the second antenna, the third antenna, and the fourth antenna to the wireless communication circuit, a sensor configured to detect an external object that comes into contact with or approaches the electronic device, and a processor.

The processor may select an antenna to output a signal transmitted from the wireless communication circuit, based on a frequency band of the signal, a state of the foldable housing, and/or detecting contact or an approach of the external object by the sensor, and control the switch so that the wireless communication circuit and the selected antenna are electrically connected.

In an embodiment, the processor may control the switch so that either one of the first antenna or the third antenna is connected to the wireless communication circuit, based on the wireless communication circuit transmitting and receiving the signal in the first frequency band.

In an embodiment, the processor may control the switch so that the first antenna is connected to the wireless communication circuit, based on that contact of a user's body part is not detected through the sensor.

In an embodiment, the processor may control the switch so that the third antenna is connected to the wireless communication circuit, based on contact of a user's body part detected through the sensor and the electronic device in an unfolded state.

In an embodiment, the processor may control the switch so that the first antenna is connected to the wireless communication circuit and perform control to reduce transmission power of the first antenna to a predetermined level, based on contact of a user's body part detected through the sensor and the electronic device in a folded state.

In an embodiment, the processor may control the switch so that either one of the second antenna or the fourth antenna is connected to the wireless communication circuit, based on the wireless communication circuit transmitting and receiving a signal in the second frequency band.

In an embodiment, the processor may control the switch so that the second antenna is connected to the wireless communication circuit, based on that contact of a user's body part is not detected through the sensor.

In an embodiment, the processor may control the switch so that the fourth antenna is connected to the wireless communication circuit, based on contact of a user's body part detected through the sensor and the electronic device in an unfolded state.

In an embodiment, the processor may control the switch so that the second antenna is connected to the wireless communication circuit and perform control to reduce transmission power of the second antenna to a predetermined level, based on contact of a user's body part detected through the sensor and the electronic device in a folded state.

In an embodiment, the processor may control the switch so that the fourth antenna is connected to the wireless communication circuit, based on a distance between the second antenna and the fourth antenna exceeding a specified value and a user's body part detected through the sensor as being in contact with the second antenna but not being in contact with the fourth antenna.

In an embodiment, the processor may control the switch so that either one of the first antenna or the third antenna is connected to the wireless communication circuit, based on the wireless communication circuit transmitting and receiving the signal in the first frequency band, and control the switch so that either one of the second antenna or the fourth antenna is connected to the wireless communication circuit, based on the wireless communication circuit being changed to transmit and receive the signal in the second frequency band.

In an embodiment, the processor, when the signal in the first frequency band is transmitted and received,

may control the switch so that the signal in the first frequency band is transmitted and received through the second antenna, based on a data transmission rate of the second antenna higher than a data transmission rate of the first antenna.

In an embodiment, the wireless communication circuit may include a Wi-Fi communication circuit.

A method for switching antennas in an electronic device may include selecting an antenna to output a signal transmitted from a wireless communication circuit, based on a frequency band of the signal, a state of a foldable housing, and/or detecting contact or an approach of an external object by a sensor, and controlling a switch so that the wireless communication circuit and the selected antenna are electrically connected.

In an embodiment, the selecting of an antenna to output the signal transmitted from the wireless communication circuit, based on the frequency band of the signal, may further include controlling the switch so that either one of a first antenna or a third antenna is connected to the wireless communication circuit, based on the wireless communication circuit transmitting and receiving a signal in a first frequency band.

In an embodiment, the antenna switching method of an electronic device may further include controlling the switch so that the third antenna is connected to the wireless communication circuit, based on contact of a user's body part detected through the sensor and the electronic device in an unfolded state.

In an embodiment, the antenna switching method of an electronic device may further include controlling the switch so that the first antenna is connected to the wireless communication circuit and performing control to reduce transmission power of the first antenna to a predetermined level, based on contact of a user's body part detected through the sensor and the electronic device in a folded state.

In an embodiment, the selecting of an antenna to output a signal transmitted from a wireless communication circuit, based on the frequency band of the signal, may further include controlling the switch so that either one of the second antenna or the fourth antenna is connected to the wireless communication circuit, based on the wireless communication circuit transmitting and receiving a signal in the second frequency band.

In an embodiment, the antenna switching method of an electronic device may further include may include controlling the switch so that the fourth antenna is connected to the wireless communication circuit, based on contact of a user's body part detected through the sensor and the electronic device in an unfolded state.

In an embodiment, the antenna switching method of an electronic device may further include may further include controlling the switch so that the second antenna is connected to the wireless communication circuit and performing control to reduce transmission power of the second antenna to a predetermined level, based on contact of a user's body part detected through the sensor and the electronic device in a folded state.

## Claims

1. An electronic device comprising:
a foldable housing comprising
a hinge structure,
a first housing structure connected to the hinge structure and comprising a first surface facing a first direction, a second surface facing a second direction opposite the first surface, and a first lateral member surrounding a first space between the first surface and the second surface, and
a second housing structure connected to the hinge structure and comprising a third surface facing a third direction, a fourth surface facing a fourth direction opposite the third direction, and a second lateral member surrounding a second space between the third surface and the fourth surface, the second housing structure being folded relative to the first housing structure around the hinge structure,
wherein the foldable housing is configured such that the third direction is opposite the first direction in a folded state and so that the third direction is the same as the first direction in an unfolded state;
a wireless communication circuit;
a first antenna configured to transmit and receive a first signal in a first frequency band and disposed on a first part of the first lateral member;
a second antenna configured to transmit and receive a second signal in a second frequency band different from the first frequency band and disposed on a second part of the first lateral member;
a third antenna configured to transmit and receive a third signal in the first frequency band and disposed on a third part of the second lateral member;
a fourth antenna configured to transmit and receive a fourth signal in the second frequency band and disposed on a fourth part of the second lateral member;
a switch configured to electrically connect at least one of the first antenna, the second antenna, the third antenna, and the fourth antenna to the wireless communication circuit;
a sensor configured to detect an external object that comes into contact with or approaches the electronic device; and
a processor, wherein the processor is configured to:
select an antenna to output a signal from at least one of the first, second, third, or fourth signals transmitted from the wireless communication circuit, based on a frequency band of the signal, a state of the foldable housing, and/or detecting contact or an approach of the external object by the sensor; and
control the switch so that the wireless communication circuit and the antenna selected are electrically connected.

2. The electronic device of claim 1,
wherein the processor is configured to,
based on the wireless communication circuit transmitting and receiving the signal in the first frequency band, control the switch so that either one of the first antenna or the third antenna is connected to the wireless communication circuit.

3. The electronic device of claim 2,
wherein the processor is configured to,
based on that contact of a user's body part is not detected through the sensor, control the switch so that the first antenna is connected to the wireless communication circuit.

4. The electronic device of claim 2,
wherein the processor is configured to,
based on contact of a user's body part detected through the sensor and the electronic device in an unfolded state, control the switch so that the third antenna is connected to the wireless communication circuit.

5. The electronic device of claim 2,
wherein the processor is configured to,
based on contact of a user's body part detected through the sensor and the electronic device in a folded state, control the switch so that the first antenna is connected to the wireless communication circuit and perform control to reduce transmission power of the first antenna to a predetermined level.

6. The electronic device of claim 1,
wherein the processor is configured to,
based on the wireless communication circuit transmitting and receiving a signal in the second frequency band, control the switch so that either one of the second antenna or the fourth antenna is connected to the wireless communication circuit.

7. The electronic device of claim 6,
wherein the processor is configured to,
based on that contact of a user's body part is not detected through the sensor, control the switch so that the second antenna is connected to the wireless communication circuit.

8. The electronic device of claim 6,
wherein the processor is configured to,
based on contact of a user's body part detected through the sensor and the electronic device in an unfolded state, control the switch so that the fourth antenna is connected to the wireless communication circuit.

9. The electronic device of claim 6,
wherein the processor is configured to,
based on contact of a user's body part detected through the sensor and the electronic device in a folded state, control the switch so that the second antenna is connected to the wireless communication circuit and perform control to reduce transmission power of the second antenna to a predetermined level.

10. The electronic device of claim 9,
wherein the processor is configured to,
based on that a distance between the second antenna and the fourth antenna exceeds a specified value and the user's body part is detected through the sensor as being in contact with the second antenna but not being in contact with the fourth antenna, control the switch so that the fourth antenna is connected to the wireless communication circuit.

11. The electronic device of claim 1,
wherein the processor is configured to:
based on the wireless communication circuit transmitting and receiving the signal in the first frequency band, control the switch so that either one of the first antenna or the third antenna is connected to the wireless communication circuit; and
based on the wireless communication circuit being changed to transmit and receive the signal in the second frequency band, control the switch so that either one of the second antenna or the fourth antenna is connected to the wireless communication circuit.

12. The electronic device of claim 1,
wherein the processor is configured to, in a situation where the signal in the first frequency band is transmitted and received, based on a data transmission rate of the second antenna higher than a data transmission rate of the first antenna, control the switch so that the signal in the first frequency band is transmitted and received through the second antenna.

13. The electronic device of claim 1,
wherein the wireless communication circuit comprises a Wi-Fi communication circuit.

14. A method for switching antennas in an electronic device, the method comprising:
selecting an antenna to output a signal transmitted from a wireless communication circuit, based on a frequency band of the signal, a state of a foldable housing, and/or detecting contact or an approach of an external object by a sensor; and
controlling a switch so that the wireless communication circuit and the selected antenna are electrically connected.

15. The method of claim 14,
wherein the selecting of an antenna to output the signal transmitted from the wireless communication circuit, based on the frequency band of the signal, further comprises
controlling the switch so that either one of a first antenna or a third antenna is connected to the wireless communication circuit, based on the wireless communication circuit transmitting and receiving a signal in a first frequency band.
